# EUROPÄISCHE PATENTSCHRIFT

(11) **EP 0 717 217 B1**
(45) Veröffentlichungstag und Bekanntmachung des Hinweises auf die Patenterteilung: **06.05.1998**
(21) Anmeldenummer: 95118283.1
(22) Anmeldetag: 21.11.1995
(51) Int. Cl.: F16H 37/08, B60K 17/16, F16H 3/085

(54) **Zahnräderwechselgetriebe für ein Kraftfahrzeug**
Automotive gear box
Boîte de vitesse pour véhicule

(30) Priorität: 12.12.1994 DE 4444120
(43) Veröffentlichungstag der Anmeldung: 19.06.1996
(73) Patentinhaber: MC Micro Compact Car Aktiengesellschaft, 2500 Biel 4 (CH)
(72) Erfinder: Bender, Helmut, Dipl.-Ing., D-74385 Pleidelsheim (DE)
(74) Vertreter: Wittner, Walter

(56) Entgegenhaltungen:
- EP-A- 0 242 338
- EP-A- 0 281 693
- CH-A- 205 282
- DE-U- 1 765 662

## Beschreibung

Die Erfindung bezieht sich auf ein Zahnräderwechselgetriebe nach dem Oberbegriff von Patentanspruch 1.

Aus der EP 0 242 338 A1 ist ein Zahnräderwechselgetriebe der eingangs genannten Art bekannt, bei welchem die Nachschalt-Zahnradstufe mit der hohen Übersetzung - bezogen auf die Längsrichtungen der Ausgangswelle - zwischen der Zahnradstufe zur Bildung des Rückwärtsganges und der Nachschalt-Zahnradstufe mit der niedrigen Übersetzung sowie die Zahnradstufe zur Bildung des niedrigsten Vorwärtsganges zwischen der Zahnradstufe zur Bildung des Rückwärtsganges und der Nachschalt-Zahnradstufe mit der hohen Übersetzung angeordnet sind. Auf der Ausgangswelle ist eine Wechselschaltkupplung angeordnet, deren zur Ausgangswelle drehfeste Schaltschiebemuffe zum fakultativen Ankuppeln der beiden Losräder der Zahnradstufen zur Bildung des niedrigsten und des höchsten Vorwärtsganges an die Ausgangswelle verwendet ist und zusätzlich den zur Ausgangswelle konzentrischen Zahnkranz der Zahnradstufe zur Bildung des Rückwärtsganges trägt, welch letzterer durch axiales Einschieben eines Zwischenzahnrades, das mit einem drehfest auf der Eingangswelle sitzenden Zahnrad kämmt, in den Zahnkranz der in die Neutralstellung gebrachten Schaltschiebemuffe eingerückt wird, mithin nicht synchronisiert ist. Für dieses Zahnräderwechselgetriebe wird es als wesentlich angesehen, daß die Anzahl der als Antriebsverbindung zwischen Ein- und Ausgangswelle verwendeten Zahnradstufen kleiner als die Anzahl der erzielbaren Vorwärtsgänge - also kleiner als 2 x 2 = 4 - ist. In der Druckschrift ist zwar der Hinweis enthalten, die Anzahl der erzielbaren Vorwärtsgänge durch eine zusätzliche als Antriebsverbindung zwischen Ein- und Ausgangswelle verwendete Zahnradstufe erhöhen zu können - Hinweise über eine Realisierung eines solchen Zahnräderwechselgetriebes sind der Druckschrift jedoch nicht zu entnehmen.

Die der Erfindung zugrunde liegende Aufgabe besteht im wesentlichen darin, ein für den Quereinbau im Kraftfahrzeug konzipiertes Zahnräderwechselgetriebe der eingangs genannten Art mit wenigstens fünf Vorwärtsgängen zu schaffen, welches sich durch einen hohen Wirkungsgrad zur Reduzierung des Kraftstoffverbrauches, geringe Herstellungskosten und ein niedriges Gewicht auszeichnet.

Die erläuterte Aufgabe ist gemäß der Erfindung in vorteilhafter Weise mit den kennzeichnenden Merkmalen von Patentanspruch 1 gelöst.

Bei dem Zahnräderwechselgetriebe nach der Erfindung sind für die im niedrigsten Vorwärtsgang in die Drehmomentübertragung eingeschaltete Nachschalt-Zahnradstufe weder ein Doppelzahnrad noch eine Zwischenwelle erforderlich, so daß der Bauaufwand, das Gewicht, der Kraftstoffverbrauch und die Herstellungskosten gering sind.

Bei dem Zahnräderwechselgetriebe nach der Erfindung sind die aktiven Zahneingriffe gering, so daß der Kraftstoffverbrauch niedrig ist.

Bei dem Zahnräderwechselgetriebe nach der Erfindung ist ein zweistufiges Nachschalt-Getriebe verwendet, bei dem die eine Zahnradstufe in den unteren Gängen und die andere Zahnradstufe in den oberen Gängen mit den Zahnradstufen des Grundgetriebes verknüpft ist.

Bei dem Zahnräderwechselgetriebe nach der Erfindung kann das Grundgetriebe mit einer relativ engen Spreizung von beispielsweise 1,7 bei einer Gesamtspreizung von 5,0 ausgelegt sein. Dadurch sind die Differenzdrehzahlen der Getriebeelemente klein, wodurch der Wirkungsgrad auch in besonders relevanten Betriebspunkten hoch ist, z.B. im V. Gang bei konstanter Fahrgeschwindigkeit von 90 oder 120 km/h.

Bei dem Zahnräderwechselgetriebe nach der Erfindung können auf der Ausgangswelle nur Losräder angeordnet sein, so daß bei einem Gruppenwechsel - bei welchem sowohl die Zahnradstufe im Grundgetriebe als auch die Zahnradstufe im Nachschalt-Getriebe wechselt - nur die Ausgangswelle beschleunigt oder verzögert werden muß. Dadurch kann die auf der Ausgangswelle angeordnete Wechselschaltkupplung des Nachschalt-Getriebes als Klauenkupplung ausgeführt werden, welche kostengünstiger ist und kürzere Schaltzeiten ermöglicht als eine reibschlüssige Synchronisierung.

Bei dem Zahnräderwechselgetriebe nach der Erfindung ist die Eingangswelle in der üblichen Weise an ihrem dem Ausgleichsgetriebe zugekehrten Wellenende mit dem Antriebsmotor über eine Trennkupplung verbunden, so daß durch die erfindungsgemäße Anordnung der die hohe Übersetzung aufweisenden Nachschalt-Zahnradstufe, deren auf der Ausgangswelle sitzendes Zahnrad gegenüber dem koaxialen Zahnrad der die niedrige Übersetzung aufweisenden Nachschalt-Zahnradstufe den kleineren Durchmesser aufweist, die Möglichkeit geschaffen ist, dieses kleinere Zahnrad näher zum Antriebsmotor hin anordnen zu können, wodurch Bauraum für die Aufnahme einer zusätzlichen Zahnradstufe zur Erweiterung des Zahnräderwechselgetriebes auf wenigstens fünf Vorwärtsgänge geschaffen ist.

Bei dem Zahnräderwechselgetriebe nach der Erfindung ist die Synchronisierung des Rückwärtsganges ermöglicht, wobei die betreffende Zahnradstufe an dem zum Ausgleichsgetriebe entgegengesetzten Getriebeende angeordnet und somit die weitere Möglichkeit geschaffen ist, das Zwischenzahnrad dieser Zahnradstufe an der benachbarten Gehäuseabschlußwand des Getriebegehäuses lagern zu können.

Bei dem Zahnräderwechselgetriebe nach der Erfindung ist durch die Ausgestaltungen nach den Patentansprüchen 2 bis 4 eine die Nachschalt-Zahnradstufe mit der niedrigen Übersetzung enthaltende gebundene Zahnradstufe verwendet, so daß entweder die Zahl der Zahnräder und die Baulänge reduziert oder das Getriebe um wenigstens einen Vorwärtsgang erweitert werden können.

Bei dem Zahnräderwechselgetriebe nach der Erfindung ist durch die Ausgestaltungen nach Patentanspruch 5 eine die Nachschalt-Zahnradstufe mit der hohen Übersetzung enthaltende gebundene Zahnradstufe geschaffen, durch die entweder die Anzahl der Zahnräder und die Baulänge reduziert oder das Getriebe um wenigstens einen Vorwärtsgang erweitert werden kann.

Bei einer Ausführungsform des Zahnräderwechselgetriebes nach der Erfindung, welche sich durch die Verwendung von zwei je eine der Nachschalt-Zahnradstufen enthaltenden gebundenen Zahnradstufen auszeichnet, hat sich die Verwendung einer diesbezüglichen Wechselschaltkupplung gemäß Patentanspruch 6 als vorteilhaft erwiesen.

Bei dem Zahnräderwechselgetriebe nach der Erfindung kann die bauliche Zuordnung der Wechselschaltkupplung der Nachschalt-Zahnradstufen gemäß einem oder beiden der Patentansprüche 7 und 8 getroffen sein.

Bei dem Zahnräderwechselgetriebe nach der Erfindung ist gemäß Patentanspruch 9 eine Erweiterung auf wenigstens sieben Vorwärtsgänge ermöglicht, wobei durch die Maßnahme nach Patentanspruch 10 die Anzahl der Schaltmittel (Zahnradkupplungen) gering gehalten ist.

Einzelheiten der Erfindung ergeben sich aus der nachstehenden Beschreibung von vier in der Zeichnung schematisch dargestellten Ausführungsformen. In der Zeichnung bedeuten:
- Fig. 1: ein Getriebeschema eines Zahnräderwechselgetriebes nach der Erfindung in einer ersten Ausführungsform,
- Fig. 2: eine Gangtabelle für die Schaltzustände des Zahnräderwechselgetriebes von Fig. 1, wenn letzteres mit fünf Vorwärtsgängen betrieben wird,
- Fig. 3: eine Gangtabelle für die Schaltzustände des Zahnräderwechselgetriebes von Fig. 1, wenn letzteres mit sechs Vorwärtsgängen betrieben wird,
- Fig. 4: ein Getriebeschema eines Zahnräderwechselgetriebes nach der Erfindung in einer zweiten Ausführungsform,
- Fig. 5: ein Getriebeschema eines Zahnräderwechselgetriebes nach der Erfindung in einer dritten Ausführungsform,
- Fig. 6: eine Gangtabelle für die Schaltzustände des Zahnräderwechselgetriebes von Fig. 5, wenn letzteres mit sechs Vorwärtsgängen betrieben wird,
- Fig. 7: ein Getriebeschema eines Zahnräderwechselgetriebes nach der Erfindung in einer vierten Ausführungsform, und
- Fig. 8: eine Gangtabelle für die Schaltzustände des Zahnräderwechselgetriebes von Fig. 7, wenn dieses mit sechs Vorwärtsgängen betrieben wird.

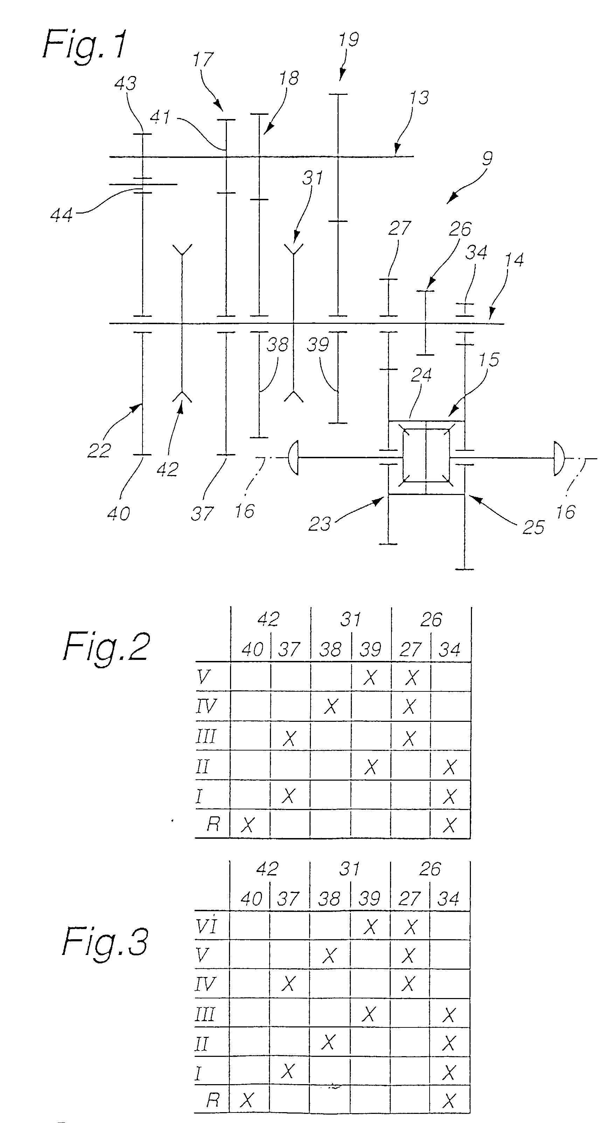

Die vier Ausführungsformen 9 bis 12 der Figuren 1, 4, 5 und 7 stimmen in folgenden Merkmalen überein:

Eine von einem Antriebsmotor antreibbare Eingangswelle 13 und eine parallele Ausgangswelle 14 sind jeweils parallel zur Zentralachse 16-16 eines Ausgleichsgetriebes 15 der Umlaufräderbauart einer Vorderachse eines Kraftfahrzeuges angeordnet. Die Eingangswelle 13 ist durch eine Zahnradstufe 17 zur Bildung von zwei Vorwärtsgängen und durch eine Zahnradstufe 22 zur Bildung eines Rückwärtsganges mit der Ausgangswelle 14 verbunden.

Das als Getriebeeingang des Ausgleichsgetriebes 15 verwendete Getriebeglied 24 - bei einem Kegelraddifferential mithin der die zur Zentralachse 16-16 umlaufenden Kegelräder lagernde Lagerbolzen - ist sowohl durch eine im niedrigsten Vorwärtsgang in die Drehmomentübertragung eingeschaltete Nachschalt-Zahnradstufe 25 als auch durch eine zweite Nachschalt-Zahnradstufe 23 mit der Ausgangswelle 14 so verbunden, daß durch eine zugeordnete Wechselschaltkupplung 26 der Kraftfluß entweder über die Zahnradstufe 23 oder über die Zahnradstufe 25 zum Ausgleichsgetriebe 15 gelegt ist. Die Zahnradstufe 17 weist ein drehfest auf der Eingangswelle 13 sitzendes Zahnrad 41 auf, welches mit einem auf der Ausgangswelle 14 gelagerten Losrad 37 kämmt, das durch eine Zahnradkupplung 42 mit der Ausgangswelle 14 kuppelbar ist. Die Zahnradstufe 22 für den Rückwärtsgang weist ein auf der Ausgangswelle 14 gelagertes Losrad 40 auf, welches mit einem Zwischenzahnrad 44 kämmt.

Bei den Zahnräderwechselgetrieben 9, 10 und 11 weist die Zahnradstufe 22 für den Rückwärtsgang ein drehfest auf der Eingangswelle 13 sitzendes Zahnrad 43 auf, welches ebenfalls mit dem Zwischenzahnrad 44 kämmt. Bei diesen Ausführungsformen ist das Losrad 40 durch die Zahnradkupplung 42 mit der Ausgangswelle 14 wahlweise kuppelbar.

Bei den Zahnräderwechselgetrieben 9 und 10 ist die Eingangswelle 13 durch zwei weitere, benachbarte Zahnradstufen 18 und 19 mit der Ausgangswelle 14 verbunden, deren Losräder 38 und 39 auf der Ausgangswelle 14 gelagert und durch eine Zahnradkupplung 31 mit der Ausgangswelle 14 wahlweise kuppelbar sind.

Bei den Zahnräderwechselgetrieben 9, 10 und 12 sind die Losräder 27 und 34 der zweiten Nachschalt-Zahnradstufe 23 und der im niedrigsten Vorwärtsgang I in die Drehmomentübertragung eingeschalteten Zahnradstufe 25 auf der Ausgangswelle 14 gelagert, wobei die jeweilige zugehörige Wechselschaltkupplung 26 als Klauenkupplung ausgeführt ist.

Bei dem Zahnräderwechselgetriebe 11 sind die Losräder 35 und 36 der zweiten Nachschalt-Zahnradstufe 23 und der im niedrigsten Vorwärtsgang I in die Drehmomentübertragung eingeschalteten Nachschalt-Zahnradstufe 25 zentrisch zur Zentralachse 16-16 angeordnet und relativ zu dem als Getriebeeingang verwendeten Getriebeglied 24 des Ausgleichsgetriebes 15 drehbar gelagert sowie wahlweise durch die als Synchronisierkupplung mit einer reibschlüssigen Kupplung und einer formschlüssigen Kupplung ausgeführte Wechselschaltkupplung 26 mit dem Getriebeglied 24 kuppelbar. Die der Ausgangswelle 14 zugeordneten Zahnräder 27 und 34 dieser beiden Zahnradstufen 23 und 25 sitzen dann folgegemäß drehfest auf ihrer Welle.

Das Zahnräderwechselgetriebe 10 weist ein auf der Eingangswelle 13 gelagertes zusätzliches Losrad 30 auf, welches mit dem auf der Ausgangswelle 14 gelagerten Zahnrad 27 der zweiten Nachschalt-Zahnradstufe 23 kämmt, durch eine Zahnradkupplung 32 mit der Eingangswelle 13 kuppelbar ist und dadurch eine zusätzliche Zahnradstufe 20 bildet, welche entweder zur Bildung eines einzelnen zusätzlichen Vorwärtsganges oder als eine dritte Nachschalt-Zahnradstufe verwendet werden kann.

Bei dem Zahnräderwechselgetriebe 11 ist die Eingangswelle 13 ebenfalls durch zwei weitere Zahnradstufen 18 und 19 mit der Ausgangswelle 14 verbunden, deren Losräder 28 und 29 auf der Eingangswelle gelagert und durch eine Zahnradkupplung 31 mit der Eingangswelle 13 wahlweise kuppelbar sind. Bei dieser Ausführungsform kämmt das Losrad 28 der Zahnradstufe 18 mit dem drehfest auf der Ausgangswelle 14 sitzenden Zahnrad 27 der zweiten Nachschalt-Zahnradstufe 23.

Bei dem Zahnräderwechselgetriebe 12 ist das drehfest auf der Eingangswelle 13 angeordnete Zahnrad 41 gleichzeitig als Eingangszahnrad für die Zahnradstufe 22 des Rückwärtsganges verwendet, kämmt also zusätzlich noch mit dem Zwischenzahnrad 44. Das mit dem Zwischenzahnrad 44 kämmende Losrad 40 ist durch eine Zahnradkupplung 45 mit der Ausgangswelle 14 kuppelbar.

Bei dem Zahnräderwechselgetriebe 12 ist die Eingangswelle 13 durch drei zusätzliche Zahnradstufen 18, 19 und 21 mit der Ausgangswelle 14 verbunden. Bei der Zahnradstufe 18 ist das auf der Eingangswelle 13 angeordnete Zahnrad 28 drehfest mit seiner Welle verbunden. Das Zahnrad 28 kämmt mit einem auf der Ausgangswelle 14 gelagerten Losrad 38, welches durch die Zahnradkupplung 42 wahlweise mit der Ausgangswelle 14 kuppelbar ist. Die Zahnradstufen 19 und 21 weisen je ein auf der Eingangswelle 13 gelagertes Losrad 29 und 33 auf, welches durch eine Zahnradkupplung 31 wahlweise mit der Eingangswelle 13 kuppelbar ist. Während das Losrad 29 der Zahnradstufe 19 mit dem Losrad 27 der Nachschalt-Zahnradstufe 23 kämmt, steht das Losrad 33 der Zahnradstufe 21 mit dem Losrad 34 der Nachschalt-Zahnradstufe 25 im Kämmeingriff.

Wie sich aus der Tabelle der Fig. 3 ergibt, werden bei dem Zahnräderwechselgetriebe 9 - bei Auslegung als 6-Gang-Getriebe - die unteren drei Gänge I bis III durch die Zahnradstufen 17 bis 19 unter jeweiliger Verknüpfung mit der Nachschalt-Zahnradstufe 25 gebildet.

Der Rückwärtsgang wird durch die Zahnradstufe 22 unter Verknüpfung mit der Nachschalt-Zahnradstufe 25 gebildet.

Die oberen Getriebegänge IV bis VI werden ebenfalls durch die Zahnradstufen 17 bis 19, hier aber unter Verknüpfung mit der zweiten Nachschalt-Zahnradstufe 23, gebildet.

Die Getriebestufung ist bei sechs Vorwärtsgängen geometrisch ausgelegt.

Wie ein Vergleich mit der Gangtabelle der Fig. 2 ergibt, wird das 5-Gang-Getriebe aus dem 6-Gang-Getriebe dadurch erhalten, daß die Gangübersetzung des II. Ganges beim 6-Gang-Getriebe, welche durch die Zahnradstufe 18 des Grundgetriebes und durch die im niedrigsten Vorwärtsgang I in die Drehmomentübertragung eingeschaltete Nachschalt-Zahnradstufe 25 gebildet wird, beim 5-Gang-Getriebe nicht verwendet wird, so daß sich eine progressive Gangstufung ergibt. Die übrigen Gänge und die jeweils aktiven Zahnradstufen ergeben sich ohne weiteres aus der tabellarischen Übersicht der Fig. 2.

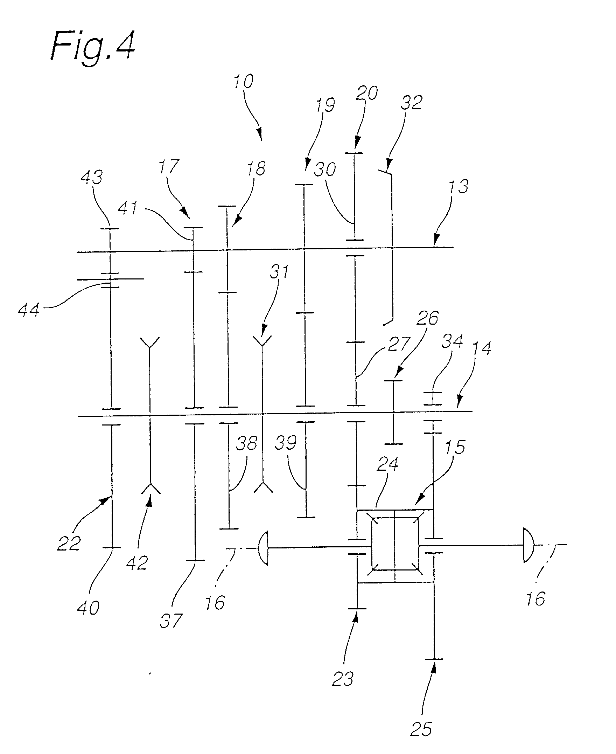

Die Tabellen der Figuren 2 und 3 gelten auch für das Zahnräderwechselgetriebe 10 der Fig. 4.

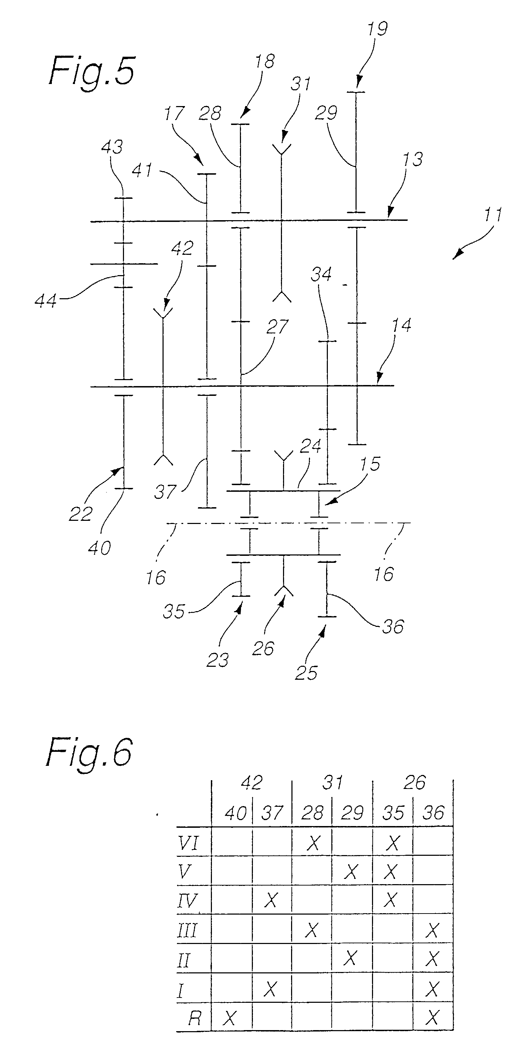

Die Gangbildung für das Zahnräderwechselgetriebe 11 der Fig. 5 ergibt sich bei Betrieb mit sechs Vorwärtsgängen aus der Tabelle der Fig. 6. Danach werden die unteren Vorwärtsgänge I bis III durch die Zahnradstufen 17 bis 19 unter jeweiliger Verknüpfung mit der Nachschalt-Zahnradstufe 25 gebildet.

Der Rückwärtsgang wird durch die Zahnradstufe 22 unter Verknüpfung mit der Nachschalt-Zahnradstufe 25 gebildet.

Die oberen Vorwärtsgänge IV bis VI werden durch die Zahnradstufen 17 bis 19 unter jeweiliger Verknüpfung mit der zweiten Nachschalt-Zahnradstufe 23 gebildet.

Bei diesem 6-Gang-Getriebe ist die Gangstufung ebenfalls geometrisch.

Zu einer progressiven Stufung gelangt man bei dem Zahnräderwechselgetriebe 11 wiederum dadurch, daß nur fünf Vorwärtsgänge verwendet werden und die Gangübersetzung für den II. Gang des 6-Gang-Getriebes nicht benutzt wird.

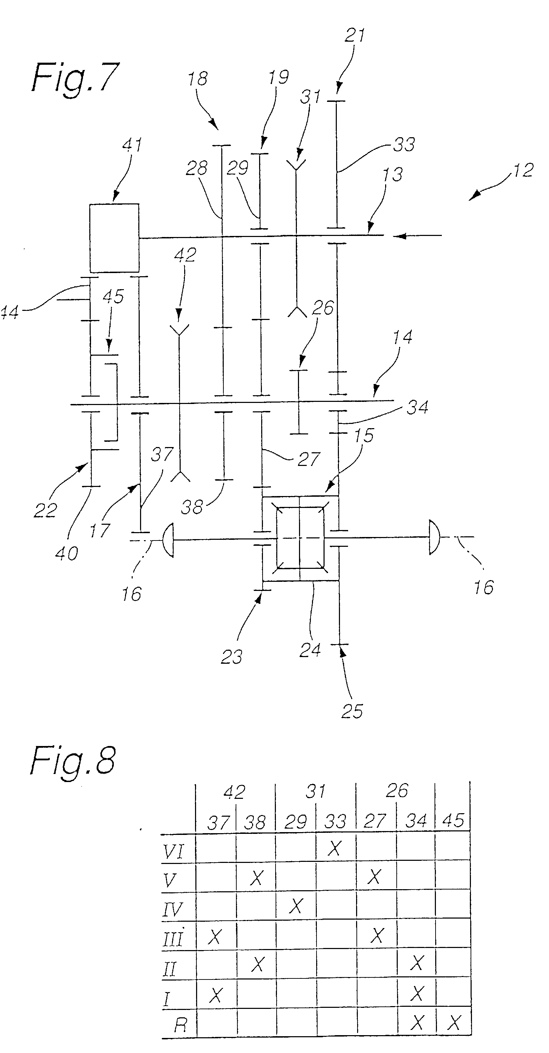

Die Gangbildung für das Zahnräderwechselgetriebe 12 für sechs Vorwärtsgänge und einen Rückwärtsgang ergibt sich aus Fig. 8, wobei in diesem Falle eine progressive Stufung vorgesehen ist, indem zwischen den Gängen II und III ein Gruppenwechsel stattfindet. Durch die Verwendung der gebundenen Zahnradstufen 19-23 im IV. Gang und 21-25 im VI. Gang ist für die Schaltung des jeweiligen Ganges nur eine Kupplung erforderlich.

## Patentansprüche

1. Zahnräderwechselgetriebe für ein Kraftfahrzeug,
- mit einer Eingangswelle (13) und einer zu ihr parallelen Ausgangswelle (14),
- mit einem dreigliedrigen Ausgleichsgetriebe (15) der Umlaufräderbauart, das ein eingangsseitiges Getriebeglied (24) und zwei ausgangsseitige Getriebeglieder zum Antrieb je eines Fahrzeugrades einer Antriebsachse aufweist, und dessen Zentralachse (16-16) parallel zu Ein- und Ausgangswelle und koaxial zur Antriebsachse angeordnet ist,
- mit einer als Antriebsverbindung zwischen Ein- und Ausgangswelle verwendeten Zahnradstufe (17) zur Bildung des niedrigsten Vorwärtsganges,
- mit einer als Antriebsverbindung zwischen Ein- und Ausgangswelle verwendeten Zahnradstufe (19, Figuren 1 und 4; 18, Figur 5; 21, Figur 7) zur Bildung des höchsten Vorwärtsganges,
- mit einer als Antriebsverbindung zwischen Ein- und Ausgangswelle verwendeten Zahnradstufe (22) zur Bildung eines Rückwärtsganges, die ein konzentrisch zur Ausgangswelle angeordnetes Zahnrad (40) aufweist,
- mit einer als Antriebsverbindung zwischen der Ausgangswelle und dem eingangsseitigen Getriebeglied (24) des Ausgleichsgetriebes verwendeten Nachschalt-Zahnradstufe (25) mit hohem Übersetzungsverhältnis, welche im niedrigsten Vorwärtsgang unter Vermittlung einer zugeordneten Wechselschaltkupplung (26) in die Drehmomentübertragung eingeschaltet ist,
- mit einer als Antriebsverbindung zwischen der Ausgangswelle und dem eingangsseitigen Getriebeglied (24) des Ausgleichsgetriebes verwendeten Nachschalt-Zahnradstufe (23) mit niedrigem Übersetzungsverhältnis, welche in einem höheren Vorwärtsgang unter Vermittlung der Wechselschaltkupplung zusammen mit der zur Bildung des niedrigsten Vorwärtsganges verwendeten Zahnradstufe (17) in die Drehmomentübertragung eingeschaltet ist,
**dadurch gekennzeichnet, daß**
- die Nachschalt-Zahnradstufe (23) mit niedrigem Übersetzungsverhältnis, bezogen auf die Längsrichtungen der Zentralachse (16-16), zwischen der Zahnradstufe (22) zur Bildung des Rückwärtsgangs und der Nachschalt-Zahnradstufe (25) mit hohem Übersetzungsverhältnis angeordnet ist,
- das konzentrisch zur Ausgangswelle angeordnete Zahnrad (40) der Zahnradstufe zur Bildung des Rückwärtsganges auf dem zum Ausgleichsgetriebe (15) entgegengesetzt liegenden Wellenende der Ausgangswelle (14) drehbar gelagert und durch eine Kupplung (42, Figuren 1, 4 und 5; 45, Figur 7) zur Bildung des Rückwärtsganges mit der Ausgangswelle kuppelbar ist,
- die Zahnradstufe (17) zur Bildung des niedrigsten Vorwärtsganges, bezogen auf die Längsrichtungen der Eingangswelle, zwischen der Zahnradstufe (22) zur Bildung des Rückwärtsganges und der Zahnradstufe (19, Figuren 1 und 4; 18, Figur 5; 21, Figur 7) zur Bildung des höchsten Vorwärtsganges liegt,
- eine zusätzliche Zahnradstufe (18, Figuren 1, 4 und 7; 19, Figur 5) vorgesehen ist, die zur Bildung wenigstens eines zwischen dem niedrigsten und dem höchsten Vorwärtsgang liegenden weiteren Vorwärtsganges in die Drehmomentübertragung zwischen der Eingangswelle und dem eingangsseitigen Getriebeglied (24) des Ausgleichsgetriebes einschaltbar ist, und
- ein Zahnrad (28, Figuren 1, 4 und 7; 29, Figur 5) der zusätzlichen Zahnradstufe auf der Eingangswelle (13) entweder zwischen der Zahnradstufe (17) zur Bildung des niedrigsten Vorwärtsganges und der Zahnradstufe zur Bildung des höchsten Vorwärtsganges oder an dem der Zahnradstufe zur Bildung des Rückwärtsganges entgegengesetzt liegenden Wellenende der Eingangswelle (13) angeordnet ist.

2. Zahnräderwechselgetriebe nach Anspruch 1,
**dadurch gekennzeichnet,**
daß die Nachschalt-Zahnradstufe (23) mit der niedrigen Übersetzung und die Zahnradstufe (18 in Fig. 5; 20 in Fig. 4) zur Bildung des höchsten Vorwärtsganges (VI in Fig. 5; VII in Fig. 4) oder eine zweite zusätzliche Zahnradstufe (19 in Fig. 7), welche zur Bildung wenigstens eines weiteren zwischen dem niedrigsten und dem höchsten Vorwärtsgang liegenden Vorwärtsganges (IV in Fig. 7) in die Drehmomentübertragung zwischen der Eingangswelle (13) und dem eingangsseitigen Getriebeglied (24) des Ausgleichsgetriebes (15) einschaltbar ist, durch ein gemeinsames auf der Ausgangswelle (14) angeordnetes Losrad (27) zu einer gebundenen Zahnradstufe(18-23 in Fig. 5; 20-23 in Fig. 4; 19-23 in Fig. 7) zusammengefaßt sind, die ein auf der Eingangswelle (13) angeordnetes zweites Losrad (28 in Fig. 5; 30 in Fig. 4; 29 in Fig. 7) aufweist,das durch eine Kupplung (31 in Fign. 5 und 7; 32 in Fig. 4) mit der Eingangswelle (13) kuppelbar ist.

3. Zahnräderwechselgetriebe nach Anspruch 2,
**dadurch gekennzeichnet,**
daß das auf der Eingangswelle (13) angeordnete Losrad (30 in Fig. 4) der die Zahnradstufe (20) zur Bildung des höchsten Vorwärtsganges (VII) aufweisenden gebundenen Zahnradstufe (20-23) durch die Kupplung (32) für sich mit der Eingangswelle (13) kuppelbar ist.

4. Zahnräderwechselgetriebe nach Anspruch 2,
**dadurch gekennzeichnet,**
daß die Kupplung (31 in Fig. 5) zum Ankuppeln des auf der Eingangswelle (13) angeordneten Losrades (28) der die Zahnradstufe (18) zur Bildung des höchsten Vorwärtsganges(VI) aufweisenden gebundenen Zahnradstufe (18-23) an die Eingangswelle (13) als Wechselschaltkupplung zusätzlich mit dem auf der Eingangswelle (13) angeordneten Losrad (29) der zusätzlichen Zahnradstufe (19) zur Bildung eines zwischen dem niedrigsten und dem höchsten Vorwärtsgang liegenden weiteren Vorwärtsganges verbunden ist.

5. Zahnräderwechselgetriebe nach einem der Ansprüche 1 bis 3,
**dadurch gekennzeichnet,**
daß die Nachschalt-Zahnradstufe (25 in Fig. 7) mit der hohen Übersetzung und die Zahnradstufe (21) zur Bildung des höchsten Vorwärtsganges (VI) durch ein gemeinsames auf der Ausgangswelle (14) angeordnetes Losrad (34) zu einer gebundenen Zahnradstufe (21-25) zusammengefaßt sind, die ein auf der Eingangswelle (13) angeordnetes zweites Losrad (33) aufweist, das durch eine Kupplung (31) mit der Eingangswelle (13) kuppelbar ist.

6. Zahnräderwechselgetriebe nach den Ansprüchen 2 und 5,
**dadurch gekennzeichnet,**
daß die auf der Eingangswelle (13 in Fig. 7) angeordneten Losräder (29 und 33) der gebundenen Zahnradstufen (19-23 und 21-25) durch eine Wechselschaltkupplung (31) mit der Eingangswelle (13) verbunden sind.

7. Zahnräderwechselgetriebe nach einem der Ansprüche 1 bis 6,
**dadurch gekennzeichnet,**
daß die den Nachschalt-Zahnradstufen (23 und 25 in Fig. 5) zugeordnete Wechselschaltkupplung (26) mit dem eingangsseitigen Getriebeglied (24) des Ausgleichsgetriebes (15) verbunden ist und diesem Getriebeglied (24) die Losräder (35 und 36) der Nachschalt-Zahnradstufen (23 und 25) zugeordnet sind.

8. Zahnräderwechselgetriebe nach Anspruch 7,
**dadurch gekennzeichnet,**
daß für die den Nachschalt-Zahnradstufen (23 und 25 in Fig. 5) zugeordnete Wechselschaltkupplung (26) eine Synchronisierkupplung mit einer reibschlüssigen Kupplung und einer formschlüssigen Kupplung verwendet ist.

9. Zahnräderwechselgetriebe nach Anspruch 1,
**dadurch gekennzeichnet,**
daß eine zweite zusätzliche Zahnradstufe (19 in Fig. 4) zur Bildung eines zwischen dem niedrigsten Vorwärtsgang (I) und dem höchsten Vorwärtsgang (VII) liegenden weiteren Vorwärtsganges als Antriebsverbindung zwischen Eingangswelle (13) und Ausgangswelle (14) verwendet und - bezogen auf die Längsrichtungen der Ausgangswelle (14) - zwischen der ersten zusätzlichen Zahnradstufe (18) und der Nachschalt-Zahnradstufe (23) mit der niedrigen Übersetzung angeordnet ist.

10. Zahnräderwechselgetriebe nach Anspruch 9,
**dadurch gekennzeichnet,**
daß die Losräder (38 und 39) der beiden zusätzlichen Zahnradstufen (18 und 19) durch eine Wechselschaltkupplung (31) mit der Ausgangswelle (14) kuppelbar sind.

## Claims

1. Change-speed gear unit for a motor vehicle,
- comprising an input shaft (13) and an output shaft (14) parallel to it,
- comprising a three-element differential gear unit (15) of the planetary type which on the input side has one gear element (24) and on the output side two gear elements each driving one vehicle wheel of one driving axle and whose central axis (16-16) is arranged parallel to the input shaft and to the output shaft and coaxial to the driving axle,
- comprising a gear stage (17) used as driving connection between the input shaft and the output shaft to form the lowest forward gear ratio,
- comprising a gear stage (19, Figures 1 and 4; 18, Figure 5; 21, Figure 7) used as driving connection between the input shaft and the output shaft to form the highest forward gear ratio,
- comprising a gear stage (22) used as driving connection between the input shaft and the output shaft to form a reverse gear ratio and having a gear (40) arranged concentrically to the output shaft,
- comprising an auxiliary gear stage (25) which is used as driving connection between the output shaft and the gear element (24), on the input side, of the differential gear unit and has a high transmission ratio and which in the lowest forward gear ratio is inserted into the torque transmission with the aid of an associated change-speed clutch (26),
- comprising an auxiliary gear stage (23) which is used as driving connection between the output shaft and the gear element (24), on the input side, of the differential gear unit and has a low transmission ratio and which in a higher forward gear ratio is inserted into the torque transmission with the aid of the change-speed clutch together with the gear stage (17) used to form the lowest forward gear ratio,
characterized in that
- the auxiliary gear stage (23) having the low transmission ratio is arranged, with reference to the longitudinal directions of the central axis (16-16), between the gear stage (22) for forming the reverse gear ratio and the auxiliary gear stage (25) having a high transmission ratio,
- in that the gear (40), arranged concentrically to the output shaft, of the gear stage for forming the reverse gear ratio is mounted for rotation on that end of the output shaft (14) which is opposite the differential gear unit (15), and by means of a clutch (42, Figures 1, 4 and 5; 45, Figure 7) can be coupled to the output shaft to form the reverse gear ratio,
- in that the gear stage (17) for forming the lowest forward gear ratio is situated, with reference to the longitudinal directions of the input shaft, between the gear stage (22) for forming the reverse gear ratio and the gear stage (19, Figures 1 and 4; 18, Figure 5; 21, Figure 7) for forming the highest forward gear ratio,
- in that an additional gear stage (18, Figures 1, 4 and 7; 19, Figure 5) is provided which, in order to form at least one other forward gear ratio situated between the lowest forward gear ratio and the highest forward gear ratio, can be inserted into the torque transmission between the input shaft and the gear element (24), on the input side, of the differential gear unit, and
- in that a gear (28, Figures 1, 4 and 7; 29, Figure 5) of the additional gear stage is arranged on the input shaft (13), either between the gear stage (17) for forming the lowest forward gear ratio and the gear stage for forming the highest forward gear ratio or on that end of the input shaft (13) which is opposite the gear stage for forming the reverse gear ratio.

2. Change-speed gear unit according to Claim 1, characterized in that the auxiliary gear stage (23) having the low transmission ratio and the gear stage (18 in Figure 5; 20 in Figure 4) for forming the highest forward gear ratio (VI in Figure 5; VII in Figure 4) or a second additional gear stage (19 in Figure 7), which in order to form at least one other forward gear ratio (IV in Figure 7) situated between the lowest and the highest forward gear ratios can be inserted into the torque transmission between the input shaft (13) and the gear element (24), on the input side, of the differential gear unit (15), are united by a common loose wheel (27) arranged on the output shaft (14) to form a coupled gear stage (18-23 in Figure 5; 20-23 in Figure 4; 19-23 in Figure 7) which contains a second loose wheel (28 in Figure 5; 30 in Figure 4; 29 in Figure 7) which is arranged on the input shaft (13) and which can be coupled by a clutch (31 in Figures 5 and 7; 32 in Figure 4) to the input shaft (13).

3. Change-speed gear unit according to Claim 2, characterized in that the loose wheel (30 in Figure 4), arranged on the input shaft (13), of the coupled gear stage (20-23) containing the gear stage (20) for forming the highest forward gear ratio (VII) can be independently coupled by the clutch (32) to the input shaft (13).

4. Change-speed gear unit according to Claim 2, characterized in that the clutch (31 in Figure 5) for coupling the loose wheel (28), arranged on the input shaft (13), of the coupled gear stage (18-23) containing the gear stage (18) for forming the highest forward gear ratio (VI) to the input shaft (13) is additionally connected as a change-speed clutch to the loose wheel (29), arranged on the input shaft (13), of the additional gear stage (19) in order to form another forward gear ratio situated between the lowest and the highest forward gear ratios.

5. Change-speed gear unit according to one of Claims 1 to 3, characterized in that the auxiliary gear stage (25 in Figure 7) having the high transmission ratio and the gear stage (21) for forming the highest forward gear ratio (VI) are united by a common loose wheel (34) arranged on the output shaft (14) to form a coupled gear stage (21-25) containing a second loose wheel (33) which is arranged on the input shaft (13) and which by means of a clutch (31) can be coupled to the input shaft (13).

6. Change-speed gear unit according to Claims 2 and 5, characterized in that the loose wheels (29 and 33), arranged on the input shaft (13 in Figure 7), of the coupled gear stages (19-23 and 21-25) are connected by a change-speed clutch (31) to the input shaft (13).

7. Change-speed gear unit according to one of Claims 1 to 6, characterized in that the change-speed clutch (26) associated with the auxiliary gear stages (23 and 25 in Figure 5) is connected to the gear element (24), on the input side, of the differential gear unit (15) and the loose wheels (35 and 36) of the auxiliary gear stages (23 and 25) are associated with this gear element (24).

8. Change-speed gear unit according to Claim 7, characterized in that for the change-speed clutch (26) associated with the auxiliary gear stages (23 and 25 in Figure 5) use is made of a synchronizing clutch comprising a friction clutch and a positive clutch.

9. Change-speed gear unit according to Claim 1, characterized in that a second additional gear stage (19 in Figure 4) is used to form another forward gear ratio, situated between the lowest forward gear ratio (I) and the highest forward gear ratio (VII) as driving connection between the input shaft (13) and the output shaft (14), and, with reference to the longitudinal directions of the output shaft (14), is arranged between the first additional gear stage (18) and the auxiliary gear stage (23) having the low transmission ratio.

10. Change-speed gear unit according to Claim 9, characterized in that the loose wheels (38 and 39) of the two additional gear stages (18 and 19) can be coupled by a change-speed clutch (31) to the output shaft (14).

## Revendications

1. Boite de vitesse à engrenages pour véhicule automobile comportant
□ un arbre d'entrée (13) et un arbre de sortie (14) parallèle à ce dernier,
□ un différentiel (15) en trois parties du type d'un engrenage planétaire qui présente un organe de transmission (24) côté entrée et deux organes de transmission côté sortie pour l'entraînement respectivement d'une roue de véhicule d'un essieu moteur et dont l'axe central (16-16) est disposé parallèlement à l'arbre d'entrée et à l'arbre de sortie et coaxialement à l'essieu moteur,
□ un étage d'engrenage (17) utilisé comme liaison d'entraînement entre l'arbre d'entrée et l'arbre de sortie et destiné à former la vitesse avant la plus basse,
□ un étage d'engrenage (19, figures 1 et 4 ; 18, figure 5, 21, figure 7) utilisé comme liaison d'entraînement entre l'arbre d'entrée et l'arbre de sortie et destiné à former la vitesse avant la plus élevée,
□ un étage d'engrenage (22) utilisé comme liaison d'entraînement entre l'arbre d'entrée et l'arbre de sortie, destiné à former une marche arrière et présentant un engrenage (40) disposé de manière concentrique par rapport à l'arbre de sortie,
□ un étage d'engrenage (25) secondaire, utilisé comme liaison d'entraînement entre l'arbre de sortie et l'organe de transmission (24) côté entrée du différentiel, avec un rapport élevé de transmission qui pour la vitesse avant la plus basse, est enclenché dans la transmission de couple, par l'intermédiaire d'un embrayage (26) correspondant,
□ un étage d'engrenage (23) secondaire, utilisé comme liaison d'entralnement entre l'arbre de sortie et l'organe de transmission (24) côté entrée du différentiel, avec un faible rapport de transmission qui pour une vitesse avant plus élevée, est enclenché dans la transmission de couple, par l'intermédiaire d'un embrayage en même temps que le rapport d'engrenage (17) utilisé pour former la vitesse avant la plus basse,
caractérisé en ce que
□ l'étage d'engrenage (23) secondaire avec un faible rapport de transmission est disposé par rapport au sens longitudinal de l'axe central (16-16), entre l'étage d'engrenage (22) destiné à former la marche arrière et le rapport d'engrenage (25) secondaire avec un rapport de transmission élevé,
□ l'engrenage (40) de l'étage d'engrenage destiné à former la marche arrière, disposé de manière concentrique par rapport à l'arbre de sortie est monté à rotation sur l'extrémité de l'arbre de sortie (14) opposée au différentiel (15) et peut être couplé avec l'arbre de sortie par l'intermédiaire d'un embrayage (42, figures 1, 4 et 5 ; 45, figure 7) pour former la marche arrière,
□ l'étage d'engrenage (17) destiné à former la vitesse avant la plus basse, se situe par rapport au sens longitudinal de l'arbre d'entrée, entre l'étage d'engrenage (22) destiné à former la marche arrière et l'étage d'engrenage (19, figures 1 et 4 ; 18, figure 5 ; 21, figure 7) destiné à former la vitesse avant la plus élevée,
□ est prévu un étage d'engrenage (18, figures 1, 4 et 7 ; 19, figure 5) supplémentaire qui pour la formation au moins d'une autre vitesse avant située entre la vitesse la plus basse et la vitesse la plus élevée, peut être enclenché dans la transmission de couple, entre l'arbre d'entrée et l'organe de transmission (24) côté entrée du différentiel et
□ un engrenage (28, figures 1, 4 et 7 ; 29, figure 5) de l'étage d'engrenage supplémentaire est disposé sur l'arbre d'entrée (13) soit entre l'étage d'engrenage (17) destiné à former la vitesse avant la plus basse et l'étage d'engrenage destiné à former la vitesse avant la plus élevée soit à l'extrémité de l'arbre d'entrée (13) opposée à l'étage d'engrenage destiné à former la marche arrière.

2. Boite de vitesse à engrenages selon la revendication 1, caractérisée en ce que l'étage d'engrenage (23) secondaire avec la faible transmission et le rapport d'engrenage (18, figure 5 20 figure 4) destiné à former la vitesse avant la plus élevée (VI, figure 5 ; VII, figure 4) ou un second l'étage d'engrenage (19, figure 7) supplémentaire qui, pour former au moins une autre vitesse (IV, figure 7) avant située entre la vitesse avant la plus basse et la vitesse avant la plus élevée peut être enclenché dans la transmission de couple, entre l'arbre d'entrée (13) et l'organe de transmission (24) côté entrée du différentiel (15), sont regroupés par une roue folle (27) commune, disposée sur l'arbre de sortie (14), en un étage d'engrenage combiné (18-23 figure 5 ; 20-23 figure 4 ; 19-23 figure 7) qui présente une seconde roue folle (28, figure 5 ; 30, figure 4 ; 29, figure 7) disposée sur l'arbre d'entrée (13), qui peut être couplée à l'arbre d'entrée (13) par un embrayage (31, figures 5 et 7 ; 32, figure 4).

3. Boite de vitesse selon la revendication 2, caractérisée en ce que la roue folle (30, figure 4) disposée sur l'arbre d'entrée (13) de l'étage d'engrenage (20-23) combiné, présentant le rapport d'engrenage (20) destiné à former la vitesse avant la plus élevée (VII) peut être couplée pour elle-même à l'arbre d'entrée (13) par l'embrayage (32).

4. Boîte de vitesse selon la revendication 2, caractérisée en ce que l'embrayage (31, figure 5) destiné au couplage de la roue folle (28) disposée sur l'arbre d'entrée (13) de l'étage d'engrenage combiné (18-23) présentant le rapport d'engrenage (18) destiné à former la vitesse avant la plus élevée (VI) est relié à l'arbre d'entrée (13) en tant qu'embrayage en même temps qu'à la roue folle (29) disposée sur l'arbre d'entrée (13) de l'étage d'engrenage (19) supplémentaire destiné à former une autre vitesse avant située entre la vitesse avant la plus basse et la vitesse avant la plus élevée.

5. Boîte de vitesse selon l'une quelconque des revendications 1 à 3, caractérisée en ce que l'étage d'engrenage secondaire (25, figure 7) avec la transmission élevée et l'étage d'engrenage (21) destiné à former la vitesse avant (VI) la plus élevée sont regroupés par une roue folle (34) commune disposée sur l'arbre de sortie (14), en un étage d'engrenage combiné (21-25) qui présente une seconde roue folle (33) disposée sur l'arbre d'entrée (13) et qui peut être couplée à l'arbre d'entrée (13) par un embrayage (31).

6. Boite de vitesse selon la revendication 2 et la revendication 5, caractérisée en ce que les roues folles (29 et 33) disposées sur l'arbre d'entrée (13, figure 7) des étages d'engrenage combinés (19-23 et 21-25) sont reliées à l'arbre d'entrée (13) par un embrayage (31).

7. Boite de vitesse selon l'une quelconque des revendications 1 à 6, caractérisée en ce que l'embrayage (26) affecté aux étages d'engrenage secondaires (23 et 25, figure 5) est relié à l'organe de transmission (24) côté entrée du différentiel (15) et en ce que les roues folles (35 et 36) des étages d'engrenage secondaires (23 et 25) sont affectées à cet organe de transmission (24).

8. Boîte de vitesse selon la revendication 7, caractérisée en ce qu'un embrayage de synchronisation comportant un embrayage à friction et un embrayage à engagement positif est utilisé pour l'embrayage (26) affecté aux étages d'engrenage secondaires (23 et 25, figure 5).

9. Boîte de vitesse selon la revendication 1, caractérisée en ce qu'un second étage d'engrenage (19, figure 4) supplémentaire, destiné à la formation d'une autre vitesse avant située entre la vitesse avant la plus basse (I) et la vitesse avant la plus élevée (VII) est utilisé en tant que liaison d'entralnement entre l'arbre d'entrée (13) et l'arbre de sortie (14) et - en référence au sens longitudinal de l'arbre de sortie (14) - est disposé entre le premier étage d'engrenage (18) supplémentaire et l'étage d'engrenage secondaire (23) avec la faible transmission.

10. Boîte de vitesse selon la revendication 9, caractérisée en ce que les roues folles (38 et 39) des deux étages d'engrenage supplémentaires (18 et 19) peuvent être couplées à l'arbre de sortie (14) par un embrayage (31).
